# FASCICULE DE BREVET EUROPEEN

(11) **EP 0 550 318 B1**
(45) Date de publication et mention de la délivrance du brevet: **15.05.1996**
(21) Numéro de dépôt: 92403489.5
(22) Date de dépôt: 21.12.1992
(51) Int. Cl.: H04N 5/645, H04N 5/74

(54) **Ensemble de visualisation à TRC et dispositif optique**
Kathodenstrahlanzeigezusammenbau und optische Vorrichtung
CRT display assembly and optical device

(30) Priorité: 31.12.1991 FR 9116378
(43) Date de publication de la demande: 07.07.1993
(73) Titulaire: THOMSON TUBES ELECTRONIQUES, F-78140 Vélizy (FR)
(72) Inventeur: Sembely, Jean-Pierre, F-2402 Courbevoie Cedex (FR)
(74) Mandataire: Guérin, Michel

(56) Documents cités:
- EP-A- 0 136 360
- JP-A-57 194 684

## Description

L'invention concerne les ensembles de visualisation d'images, dans lesquels l'image produite par un tube à rayons cathodiques est transportée à l'aide l'un dispositif optique, pour être affichée sur un écran de visualisation. L'invention concerne plus particulièrement des moyens pour effectuer le positionnement relatif entre le tube à rayons cathodiques et le dispositif optique.

Parmi les ensembles de visualisation qui exigent de tels moyens de positionnement entre le tube à rayons cathodiques et le dispositif optique, on peut citer par exemple :
- les dispositifs de projection d'image de télévision ;
- les dispositifs de viseurs electroniques sur avions militaires ;
- les dispositifs d'aide à l'atterrissage sur avions civils et militaires.

Dans tous ces dispositifs, la lumière portant l'image produite par l'écran cathodoluminesrent du tube à rayons cathodiques, est captée par la ou les lentilles d'un dispositif optique, puis elle est réfléchie à l'aile de miroirs pour être projetée sur un écran de visualisation. Pour conserver les qualités de l'image produite par le tube à rayons cathodiques, il est nécessaire de réaliser un couplage optique correct entre ce tube et le dispositif optique, ce qui exige de définir parfaitement la position du plan de l'image (à l'intérieur du tube à rayons cathodiques), par rapport à des références mécaniques qui sont utilisées pour l'assemblage.

Un tube à rayons cathodiques (appelé en abrégé "TRC") incorporé dans un ensemble de visualisation du type ci-dessus défini, constitue un composant électronique dont la durée de vie peut être plus courte que celle de l'ensemble dans lequel il est monté, et il doit par conséquent pouvoir être facilement remplacé. A cet effet, les TRC ainsi utilisés sont toujours disposés dans une coquille ou enveloppe de montage, métallique, qui comporte des portées mécaniques de haute précision. Ces portées mécaniques constituent les références mécaniques qui permettent lors de l'assemblage de TRC et du dispositif optique, et compte tenu des caractéristiques optiques du dispositif optique, de définir la position de ce dernier par rapport à la position du plan de l'image.

Le plan de l'image correspond au plan apparent du luminophore c'est-à-dire au plan apparent de l'écran cathodoluminescent. Dans un TRC monochrome par exemple, l'écran cathodoluminescent est formé par une couche de luminophores. La couche de luminophores est généralement déposée sur une face intérieure d'une dalle en verre transparente, laquelle dalle ferme un bulbe avec lequel elle constitue l'enceinte étanche au vide lu TRC.

Il est à noter que le plan image ou plan apparent du luminophore est différent du plan de la face interne de la dalle, car l'"épaisseur optique" Eo de la dalle est liée à son épaisseur réelle Er par la relation Eo = Er/n, n étant l'indice de réfraction du verre formant la dalle. Par suite le plan image est situé un peu en avant de la face interne, à l'intérieur de la dalle. L'épaisseur réelle de la dalle étant connue, la position du plan image peut être définie à partir de la face externe de la dalle, et des repères de cette position peuvent être reportés sur l'enveloppe de montage métallique contenant le TRC, repères qui sont constitués par les portées mécaniques précédemment mentionnées.

Dans le cas d'un TRC circulaire, les portées mécaniques formant repères sont souvent constituées par exemple par une collerette cylindrique, plus un pion ou un trou pour le repérage angulaire. Dans le cas d'un TRC rectangulaire, ces portées mécaniques peuvent être plus complexes, trois pattes de fixations pouvant être nécessaires.

Le TRC doit donc être fixé à une position bien définie dans l'enveloppe de montage métallique, position dans laquelle il est maintenu par des résines roulées ou injectées entre l'intérieur de cette enveloppe et lui-même. Ceci constitue une opération de surmoulage relativement délicate, qui exige des outils complexes, qui doivent notamment assurer des fonctions d'étanchéité, de maintien des éléments entre eux, de positionnement du plan image par rapport aux portées mécaniques, ainsi que l'observation sur l'écran du TRC de l'action des moyens de déviation, lesquels doivent être logés dans l'enveloppe de montage et autour du TRC.

On constate fréquemment, du fait notamment des poussées plus ou moins dissymétriques qui peuvent s'exercer au moment de la polymérisation des résines injectées, des petits écarts de position du plan image, après l'assemblage TRC-enveloppe de montage.

La présente invention concerne un ensemble de visualisation tel que ci-dessus défini, et elle à pour objet de réduire voire même de supprimer certains des inconvénients liés au repérage de la position du plan d'image et au positionnement du dispositif optique par rapport à ce plan image.

L'invention concerne donc un ensemble de visualisation comportant, un tube à rayons cathodiques, un dispositif optique, le tube à rayons cathodiques comportant un bulbe dont une extrémité avant est fermée par une dalle, la dalle portant sur une face interne un écran cathodoluminescent, l'ensemble de visualisation comportant en outre des moyens le repérage de la position de l'écran cathodoluminescent, caractérisé en ce que la dalle est plus grande que la section du bulbe et comporte une partie périphérique en dépassement par rapport au bulbe, afin de constituer un repère de la position de l'écran cathodoluminescent.

L'invention sera mieux comprise à la lecture de la description qui suit, faite en référence aux dessins annexés parmi lesquels :
- la figure 1 est une vue en perspective montrant, de façon schématique, un tube à rayons cathodiques destiné à être incorporé dans un ensemble de visualisation conforme à l'invention ;
- la figure 2 montre schématiquement par une vue en coupe, une forme de réalisation préférée d'un ensemble de visualisation suivant l'invention, dans lequel est monté le tube à rayons cathodiques montré à la figure 1,

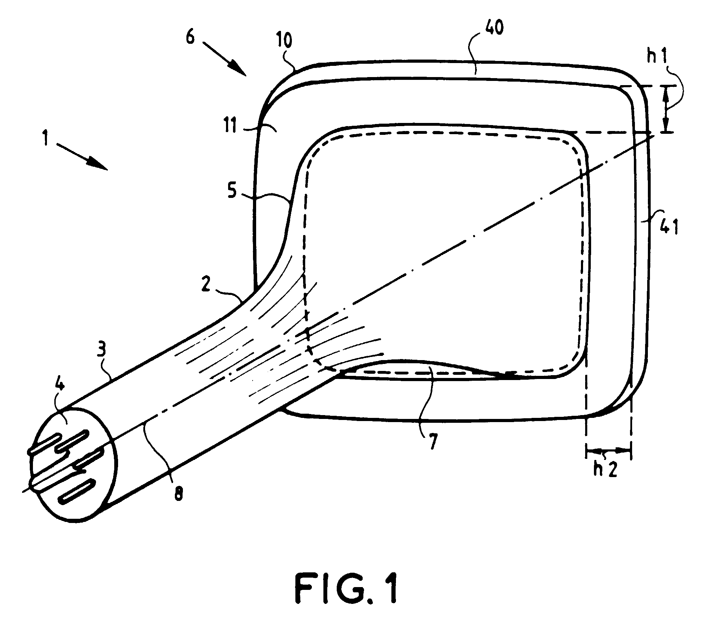

La figure 1 montre un tube à rayons cathodiques 1 ou TRC réalisé conformément à l'invention

Le TRC 1 comprend un bulbe 2 en lui-même classique, dont une extrémité arrière 3 destinée à loger le canon à électrons (non représenté) est fermée par une embase de raccordement 4, et dont l'extrémité avant 5, élargie, est fermée par une dalle 6 transparente.

Un écran cathodoluminescent 7 (symbolisé en traits pointillés) ou couche luminophore est réalisé sur une face interne de la dalle 6. L'écran cathodoluminescent 7 est centré sur un axe longitudinal 8 du TRC, et sa surface est un peu inférieure à celle de la section de l'avant 5 du bulbe 2.

Suivant une caractéristique de l'invention, la dalle 6 est plus grande que la section du bulbe 2, le manière à dépasser par rapport à ce bulbe sur au moins une partie du tour de ce dernier.

La dalle 6 comporte ainsi une partie périphérique 10 en dépassement par rapport au bulbe 2, partie périphérique qui dans l'exemple non limitatif décrit est répartie de façon symétrique par rapport au bulbe c'est-à-dire par rapport à l'axe longitudinal 8.

Le dépôt de la couche de luminophores 7 ou écran cathodoluminescent étant réalisé sur une face interne 11 de la dalle 6, cette face interne 11 est elle-même en dépassement par rapport au bulbe 2 ; cette face interne 11 est donc accessible, et elle peut constituer une référence mécanique directement disponible à l'extérieur du TRC, pour repérer ou indiquer la position du plan contenant l'écran cathodoluminescent 7.

On obtient ainsi pour un faible coût et de manière simple des repères mécaniques très précis. Il suffit d'utiliser une dalle de verre de qualité optique plane, de dimensions nettement plus grandes que le bulbe 2, et qui est scellée sur ce dernier de façon en elle-même classique, à l'aide d'rune pâte de verre frittée par exemple.

Dans l'exemple représenté, le TRC est un tube à écran 7 rectangulaire, mais bien entendu l'invention s'applique aussi bien à un tube à écran circulaire, il suffit de conférer à la dalle portant l'écran luminescent, des dimensions nettement plus grandes que le bulbe 2.

Il est à noter que la tranche de la dalle 6, peut constituer des repères de positionnement transversal du TRC, notamment sur deux côtés 40, 41 pour lesquels la hauteur de dépassement h1,h2 par rapport au bulbe 2 est connue.

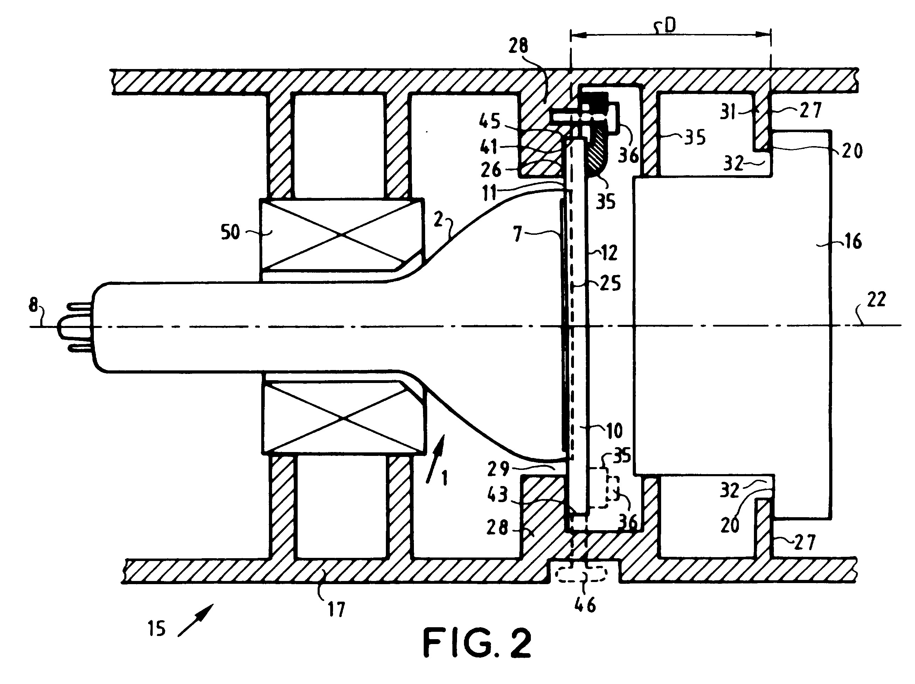

La figure 2 montre schématiquement par une vue en coupe, un ensemble de visualisation 15 dans lequel le TRC de la figure 1 est couplé à un dispositif optique 16, suivant une forme de réalisation préférée de l'invention.

L'ensemble de visualisation 15 comporte une mécanique d'assemblage ou bâti 17 auquel sont fixés le TRC 1 et le dispositif optique 16.

Le dispositif optique 16 est en lui-même classique, il a pour fonction de capter l'image lumineuse produite par le TRC 1 en vue de projeter cette image sur un écran de visualisation (non représenté). Pour simplifier la description le dispositif optique 16 est symbolisé sur la figure 2 par un bloc, mais il peut comporter par exemple plusieurs lentilles (non représentées) prépositionnées les unes par rapport aux autres et par rapport à une portée mécanique 20 lu dispositif optique, de telle sorte qu'il suffit de positionner correctement le TRC 1 par rapport à cette portée mécanique 20.

Le TRC1 et le dispositif optique 16 sont montés dans le bâti 17 de manière d'une part, à être en vis-à-vis et que l'axe longitudinal 8 du TRC soit confondu avec un axe optique 22 du dispositif optique ; et d'autre part que le plan image ou plan apparent 25 (symbolisé par une ligne en traits pointillés) soit très précisément à une distance D prédéterminée de la portée mécanique 20 du dispositif optique 16.

A cet effet, le bâti 17 comporte des premières et des secondes surfaces de référence 26, 27 situées dans des plans parallèles entre eux et perpendiculaires à l'axe longitudinal 8, et destinées respectivement au positionnement du TRC 1 et au positionnement du dispositif optique 16.

Dans l'exemple représenté, la première surface de référence 26 est constituée à l'aide d'une paroi 28 comportant une ouverture 29 dans sa partie centrale.

Le bulbe 2 du TRC est engagé dans l'ouverture 29 et la partie périphérique 10 de la dalle 6 est amenée en buté contre la paroi 28, sur une face 26 de cette dernière orientée vers le dispositif optique 16, laquelle face 26 forme la première surface de référence. En conséquence, dans l'exemple représenté c'est la face interne 11 de la partie périphérique 10 et donc de la dalle 6 qui sert de référence.

La face interne 11 porte l'écran cathodoluminescent 7 dont le plan apparent ou plan image 25 est formé à l'intérieur de la dalle 6 comme il a été précédemment expliqué.

L'indice de réfraction n de la dalle 6 étant connu ainsi que son épaisseur réelle Er, on en déduit son épaisseur optique Eo ainsi que la différence de position entre le plan image 25 et la surface de référence 26.

Il est tenu compte le cette différence de position pour placer la seconde surface le référence 27 à la distance D par rapport à la première surface de référence 26, distance D appropriée pour réaliser le couplage correct entre le TRC et le dispositif optique 16.

La seconde surface 27 de référence peut être constituée par exemple par une face i'une seconde paroi 31 sur laquelle sont appuyées les portées mécaniques 20. Dans l'exemple, la seconde paroi 31 comporte une ouverture 32 dans sa partie centrale pour laisser le passage au dispositif optique. Dans l'exemple non limitatif représenté, le bâti 17 comporte une troisième paroi 35 coopérant avec la seconde paroi 31 pour la fixation du dispositif optique 16. La troisième paroi est munie d'une ouverture centrale dans laquelle est engagé le dispositif optique 16, la position de cette ouverture centrale déterminant la position transversale de ce dernier.

La fixation du TRC1 dans le bâti peut être réalisée en solidarisant la partie périphérique 10 de la dalle 6 avec la première surface de référence 26.

Ceci peut être accompli de différentes manières, par exemple à l'aide de vis (non représentées) passant au travers de la partie périphérique 10, pour être vissées dans l'épaisseur de la première paroi 28 ; par exemple une vis à chaque angle dans le cas d'un TRC rectangulaire. Mais ceci exige de réaliser des trous de passage de vis dans la partie périphérique de la dalle 6, ce qui pour du verre constitue une opération plus difficile (et donc plus coûteuse) que l'usinage des faces et des tranches de la dalle.

Par contre le verre est un matériau suffisamment robuste pour supporter une action de pressage mécanique (il résiste très bien aux contraintes de compression). Il est donc préférable de fixer la dalle 6 au bâti sans faire de trous dans cette dernière.

Ceci peut être réalisé comme montré à la figure 2, à l'aide de pattes de fixation 35 en forme de cavalier ou pontet serrées par des vis 36 sur la première paroi 28, et qui en même temps appuient sur la face externe 12 de la dalle 6, dans la partie périphérique 10 de cette dernière. La dalle 6 peut ainsi être maintenue pressée contre la première surface de référence 26 à l'aide de plusieurs pattes de fixation 35, telles que celles montrées dans le haut de la figure 2, ces pattes de fixation pouvant être réparties sur le tour de la partie périphérique 10.

La position transversale correcte du TRC1 peut être définie en utilisant la tranche de la dalle 6 sur les côtés 40, 41 de cette dernière, par exemple pour constituer des repères transversaux relatifs au centre de l'écran cathodoluminescent 7 c'est-à-dire à la position de l'axe longitudinal 8 du TRC. Il suffit à cet effet de connaître les hauteurs h1, h2 (montrées à la figure 1) de dépassement des côtés 40,41 par rapport au bulbe, et de réaliser dans le bâti des butées mécaniques qui tiennent compte de ces hauteurs h1, h2 afin que l'axe longitudinal 8 et l'axe optique 22 soient sur un même axe.

Ces butées mécaniques peuvent consister par exemple en des décrochements réalisés dans la première paroi 28, comme montré sur la figure 2 par un décrochement 45 contre lequel est amené en butée le côté 41 de la dalle 6. A cette fin, le bâti 17 peut comporter un organe de poussée 46, qui pousse la dalle 6 et donc le TRC en butée contre le décrochement 45, en agissant sur un côté 43 de la dalle 6 opposé à celui qui constitue le repère transversal 40. L'organe de poussée 46 peut être une vis par exemple, de préférence en un matériau tendre (matière plastique, caoutchouc dur, etc... ). Dans l'exemple montré à la figure 2, le côté 42 constituant un second repère transversal se trouve dans un plan moins profond que celui de la figure 2, et par conséquent il n'est pas représenté.

Avec l'invention, il n'est plus nécessaire de placer le TRC dans une enveloppe ou coquille, ni pour son positionnement, ni pour sa protection tant mécanique que magnétique ; protections qui peuvent être assurées par le bâti 17 lui-même. Ce dernier peut en effet être réalisé, au moins dans sa partie entourant le TRC, en un matériau approprié à former un blindage magnétique.

Il découle de ceci un avantage supplémentaice, qui tient au fait que les éléments de déviation 50 nécessaires au fonctionnement du TRC sont bien entendu disposés autour du bulbe 2, mais que ces moyens de déviation peuvent facilement être séparés du TRC, alors que dans l'art antérieur ils sont noyés dans la résine autour du TRC. En conséquence, ces moyens de déviation 50 pouvant être rendus indépendants du TRC, en cas de remplacement de ce dernier ils peuvent être conservés dans le bâti 17.

L'invention peut s'appliquer avantageusement dans tous les cas où la position du plan image doit être connue. Elle constitue une solution simple, facile à mettre en oeuvre, qui améliore fortement la précision du positionnement, tout en étant d'un faible coût. Il est en effet facile et relativement peu coûteux d'approvisionner des dalles de verre, ayant une épaisseur de quelques millimètres par exemple avec une tolérance de l'ordre de ± 0,04 mm, et avec un très bon parallélisme des faces.

Il est à noter que dans l'exemple décrit en référence à la figure 2, la première surface de référence 26 sur laquelle s'appuie la dalle 6 reçoit la face interne 11 de cette dernière, mais cette première surface de référence peut tout aussi bien être formée et orientée pour recevoir la face externe 12 de la dalle 6 ; il suffit d'en tenir compte en déterminant la distance D qui sépare les deux surfaces de référence 26, 27.

## Revendications

1. Ensemble de visualisation comportant, un tube à rayons cathodiques (1), un dispositif optique (16), le tube à rayons cathodiques comportant un bulbe (2) dont une extrémité avant est fermée par une dalle (6), la dalle portant sur une face interne (11) un écran cathodoluminescent (7), l'ensemble de visualisation comportant en outre au moins une surface (26,28) de référence mécanique et des moyens de repérage (10,11) de la position de l'écran cathodoluminescent, caractérisé en ce que la dalle est plus grande que la section du bulbe (2) et comporte une partie périphérique (10) en dépassement par rapport au bulbe, afin de constituer au moins un repère de la position de l'écran cathodoluminescent (7).

2. Ensemble de visualisation suivant la revendication 1, comportant un bâti (17) dans lequel sont fixés le tube à rayons cathodiques et le dispositif optique, caractérisé en ce que au moins une des deux grandes faces (11,12) de la dalle (6) coopère avec une surface de référence (26) dudit bâti (17) pour définir la position du tube à rayons cathodiques (1) par rapport au dispositif optique (16).

3. Ensemble de visualisation suivant la revendication 2, caractérisé en ce que sur au moins un côté (40) de la dalle (6), la partie périphérique (10) dépasse par rapport au bulbe (2) d'une hauteur (h1,h2) déterminée de façon que la tranche constitue un repère de positionnement transversal coopérant avec une butée mécanique (45) du bâti, pour positionner un axe longitudinal (8) du tube à rayons cathodiques par rapport à un axe optique (2) du dispositif optique (16).

4. Ensemble de visualisation suivant la revendication 3, caractérisé en ce qu'il comporte un organe de poussée (46) agissant sur la tranche de la dalle (6) à l'opposé de la butée mécanique (45).

5. Ensemble de visualisation suivant l'une des revendications précédentes, comportant des moyens de déviation électromagnétiques (50), caractérisé en ce que les moyens de déviation sont séparables du tube à rayons cathodiques.

6. Ensemble de visualisation suivant l'une des revendications 2 à 5, caractérisé en ce que le bâti (17) constitue un blindage vis-à-vis des champs magnétiques.

## Patentansprüche

1. Anzeigevorrichtung mit einer Kathodenstrahlröhre (1) und einer optischen Vorrichtung (16), wobei die Kathodenstrahlröhre einen Kolben (2) besitzt, der an seinem vorderen Ende mit einer Schale (6) verschlossen ist, die auf einer Innenseite (11) einen Leuchtschirm (7) trägt, wobei die Anzeigevorrichtung weiter mindestens eine mechanische Bezugsoberfläche (26, 28) sowie Bezugsmittel (10, 11) für die Lage des Leuchtschirms enthält, dadurch gekennzeichnet, daß die Schale größer als der Querschnitt des Kolbens (2) ist und einen Randbereich (10) besitzt, der bezüglich des Kolbens vorsteht, um mindestens eine Bezugsmarkierung für die Lage des Leuchtschirms (7) zu bilden.

2. Anzeigevorrichtung nach Anspruch 1 mit einem Gerüst (17), in dem die Kathodenstrahlröhre und die optische Vorrichtung befestigt sind, dadurch gekennzeichnet, daß mindestens eine der großen Seiten (11, 12) der Schale (6) mit einer Bezugsoberfläche (26) des Gerüsts (17) zusammenwirkt, um die Lage der Kathodenstrahlröhre (1) bezüglich der optischen Vorrichtung (16) zu definieren.

3. Anzeigevorrichtung nach Anspruch 2, dadurch gekennzeichnet, daß auf mindestens einer Seite (40) der Schale (6) der Randbereich (10) bezüglich des Kolbens (2) um eine bestimmte Höhe (h1, h2) vorsteht, so daß die Schnittkante eine Bezugsmarkierung für die Querpositionierung bildet, die mit einem mechanischen Anschlag (45) des Gerüsts zusammenwirkt, um eine Längsachse (8) der Kathodenstrahlröhre bezüglich einer optischen Achse (2) der optischen Vorrichtung (16) zu positionieren.

4. Anzeigevorrichtung nach Anspruch 3, dadurch gekennzeichnet, daß sie ein Druckorgan (46) aufweist, das auf die Schnittkante der Schale (6) entgegengesetzt zum mechanischen Anschlag (45) drückt.

5. Anzeigevorrichtung nach einem der vorhergehenden Ansprüche, die Mittel zur elektromagnetischen Strahlablenkung (50) aufweist, dadurch gekennzeichnet, daß die Strahlablenkungsmittel von der Kathodenstrahlröhre getrennt werden können.

6. Anzeigevorrichtung nach einem der Ansprüche 2 bis 5, dadurch gekennzeichnet, daß das Gerüst (17) eine gegenüber magnetischen Feldern wirksame Abschirmung bildet.

## Claims

1. Display unit which includes a cathode-ray tube (1) and an optical device (16), the cathode-ray tube including a bulb (2) whose front end is closed by a faceplate (6), the faceplate carrying on an internal face (11) a cathodoluminescent screen (7), the display unit furthermore including at least one mechanical reference surface (26, 28) and means (10, 11) for registering the position of the cathodoluminescent screen, characterized in that the faceplate which is larger than the cross-section of the bulb (2) and includes a peripheral part (10) protruding with respect to the bulb, in order to constitute at least one register of the position of the cathodoluminescent screen (7).

2. Display unit according to Claim 1, including a framework (17) within which are fixed the cathode-ray tube and the optical device, characterized in that at least one of the two large faces (11, 12) of the faceplate (6) cooperates with a reference surface (26) of the said framework (17) so as to define the position of the cathode-ray tube (1) with respect to the optical device (16).

3. Display unit according to Claim 2, characterized in that on at least one side (40) of the faceplate (6), the peripheral part (10) protrudes with respect to the bulb (2) by a height (h1, h2) determined in such a way that the edge constitutes a transverse positioning register cooperating with a mechanical stop (45) of the framework, in order to position a longitudinal axis (8) of the cathode-ray tube with respect to an optical axis (2) of the optical device (16).

4. Display unit according to Claim 3, characterized in that it includes a thrust member (46) acting on the opposite edge of the faceplate (6) from the mechanical stop (45).

5. Display unit according to one of the preceding claims, including electromagnetic deflecting means (50), characterized in that the deflecting means are separable from the cathode-ray tube.

6. Display unit according to one of Claims 2 to 5, characterized in that the framework (17) constitutes a shield in respect of magnetic fields.
